# EUROPEAN PATENT APPLICATION

(11) **EP 2 207 393 A1**
(43) Date of publication of application: **14.07.2010**
(21) Application number: 09305029.2
(22) Date of filing: 12.01.2009
(51) Int. Cl.: H04W 68/04, H04W 68/06

(54) **Method and controller for paging a mobile set in a cellular network**

(71) Applicant: Alcatel Lucent, 75008 Paris (FR)
(72) Inventor: Nguyen, Van Minh, 94340, Joinville le pont (FR); Thomas, Laurent, 91120, Palaiseau (FR); Marcé, Olivier, 91300, Massy (FR)
(74) Representative: Hervouet, Sylvie

(57) **Abstract**

A method, in a cellular network for paging a mobile set (3) in a paging group (1) comprising the steps of:
- organizing cells (8) of said paging group (1) into a paging sequence (6) comprising ordered sets (7) comprising said cells (8),
- paging said paging sequence (6) by successively paging each set (7), one set (7) at a time, in order of appearance in said paging sequence (6), until said mobile set (3) is found,
where said organizing cells step comprises:
- computing a ranking value for each cell (8) pertaining to said paging sequence (6),
- ordering said cells (8) after said ranking value in descending order,
- grouping contiguous ordered cells (8) into sets (7).

## Description

The technical domain of the invention is the domain of wireless cellular communication networks, and particularly the "paging" of a mobile set.

More particularly, the invention concerns a method and a system to solve the problem of locating and awakening a mobile set prior to the establishment of a call in a smart way so as to minimize the resources used.

A wireless cellular network is composed of cells. Each cell covers a given area, and is managed by a base station comprising radio transmitters able to exchange radio messages with mobile sets located in said covered area in the vicinity of said base station. The network comprises communication links between the base stations of all cells. In the following, the words cell and base station are most often confused.

In a wireless cellular network, the mobile sets are in idle mode when they are not involved in a connection. This allows battery saving and increases mobile set autonomy.

For the purpose of managing the mobile set location in idle mode, the cellular network is organized in paging groups each of which gathers several cells, one cell pertaining to one and only one paging group. Each time the mobile set changes of paging group, it informs the network through a location update message. This operation is referred as location update.

A mobile set may also does a "Timer Location Update", at expiration of a time period defined by the network that can e.g. be sent by the base station to mobiles. A timer location update is also referred as a location update.

While in idle mode, the mobile set periodically awakes during listening intervals. During said intervals, the mobile set listen to messages broadcast by the base stations. Each base station periodically broadcast messages indicating at least the identity of the paging group to which its cell belongs.

This allows a mobile set to detect it has changed of paging group. The mobile set can then issue a location update message to inform the new paging group that said mobile set has entered it.

A mobile set then enters into a paging group by sending a location update message to said paging group. The cell from where said mobile set sent its last location update message, (the cell whose base station has received said location update message) is called the center cell of said mobile set, that is, either the cell by which said mobile set has entered into said paging group or the cell where said mobile has done its last timer location update. This information is stored and the network thus always knows in which paging group a given mobile set is located.

When a call toward the mobile set is incoming, the wireless cellular network needs to locate, that is to determine in which cell in the paging group, the mobile set is, in order to awake the terminal before establishing the call. This locating and awakening operation is called "paging". The wireless cellular network performs paging by sending a wake up or paging message to the paging group where the mobile set has updated its location to the last time.

The solution used by prior art embodiments is to page (search) the mobile set in the whole paging group where the mobile set has lastly update its location. The paging group then sends a paging message to all the base stations of its cells, and each base station broadcast said paging message to all the mobile sets in said cells. This obviously does not optimize the network resources, as all the cells in the paging group are paged.

Some network standards, and among them the WiMAX standard for example, define multi-step paging as an operation to sequentially page a subset of the cells in the paging group, until the searched mobile set is found. A paging controller does the paging by paging a first subset or set of cells, then a second set and so on successively. As soon as the mobile set is found, that is when the mobile set receives a paging message, it awakes and responds by an acknowledgement message. When the paging controller receives such an acknowledgement message the mobile set is paged (found) and the paging is over. The remaining cells need not to be paged. The resources that would have been consumed to page said remaining cells can then be saved.

It is of a primary importance to minimize the resources, and especially the radio resources, used for the paging, since radio resources are expensive.

However the multi-step paging principle provides no control over the sequence of paging, and does not help in the optimization of resources usage in paging operation.

The invention provides necessary control over the multi-step paging, mainly by providing a method and system able to provide an optimized paging sequence allowing to proceed an optimized dynamic multi-step paging, with a increased probability of quickly find the paged mobile set, while satisfying a provided constraint, such as a maximum paging delay, and/or a maximum failure rate.

The invention is focused on WiMAX networks that already include the multi-step paging concept, but can be applied to any cellular networks using paging procedure, especially LTE/SAE networks.

The object of the invention is a method, in a cellular network comprising at least one paging group, said paging group comprising at least one cell, for paging a mobile set in said paging group comprising the steps of:
- organizing cells of said paging group into at least one paging sequence comprising ordered sets comprising said cells, one cell pertaining to at most one set,
- paging said paging sequence by successively paging each set of cells by sending a paging message to all the cells pertaining to said set, one set at a time, in order of appearance in said paging sequence, until said mobile set is found, said organizing cells step comprising:
   - computing a ranking value for each cell pertaining to said paging sequence,
   - ordering said cells after said ranking value in descending order,
   - grouping contiguous ordered cells into sets.

According to another feature of the invention said ranking value is an efficiency value equal to a mobile set presence probability value representing a probability of presence of said mobile set in said cell divided by a paging cost value representing a radio resource consumption to page the mobile in said cell.

Alternately said ranking value is equal to a mobile set presence probability value.

According to another feature of the invention said mobile set presence probability value is function of said cell and of a center cell where said mobile set has done its last location update.

According to another feature of the invention said mobile set probability value is determined statistically out off statistics about location and mobility of mobile sets in the network.

Advantageously said statistics comprise mean and variance of mobile set presence time in each cell and/or in paging group.

Advantageously said statistics are derived from counters from operation and maintenance centre.

According to another feature of the invention said mobile set probability value is determined by a simulation model taking into account parameters among:
- topology and geographical relations of the cells of said paging group,
- mean size of a cell,
- mean speed of said mobile set,
- mean rate of arriving calls to said mobile set.

According to another feature of the invention said mobile set probability value is defined for said paging group, or for a class of mobile sets presenting the same moving behaviour, or for each mobile set.

According to another feature of the invention the grouping step comprises:
- getting for each cell a cell paging delay,
- optimizing the grouping of ordered cells to form a paging sequence, under a cost function, computing for said paging sequence, a sequence paging delay out of said cell paging delays, in order to provide a paging sequence with the smallest sequence paging delay.

According to another feature of the invention the method further comprises:
- configuring a maximum paging delay defining a maximum acceptable delay for paging said mobile set,
and the optimizing step provides a paging sequence with a sequence paging delay less than said maximum paging delay.

Alternately, the grouping step comprises:
- configuring a maximum paging delay defining a maximum acceptable delay for paging said mobile set,
- configuring a maximum paging failure rate defining a maximum rate of acceptable paging failure,
- getting for each cell a cell paging delay,
- optimizing grouping and truncating of ordered cells to form a paging sequence, under a cost function, computing for said truncated paging sequence a sequence paging delay out of said cell paging delays, and a sequence failure rate, until providing a paging sequence with a sequence paging delay less than said maximum paging delay and a sequence failure rate less than said maximum failure rate.

The invention also concerns a paging controller, in a cellular network comprising at least one paging group, said paging group comprising at least one cell, able to page a mobile set, in said paging group, comprising means for implementing the method according to the previous embodiments.

Others features, details and advantages of the invention will become more apparent from the detailed illustrating description given hereafter with respect to the drawings on which:
- figure 1 shows an illustrative paging group,
- figure 2 shows an illustrative paging sequence,
- figure 3a, 3b shows relation between presence values en probability values,
- figure 4 illustrate the distance feature,
- figure 5 show an example of presence probability in function of the distance,
- figure 6 illustrates the truncating and grouping of a paging sequence,
- figure 7 illustrates the function of a paging controller,
- figure 8 illustrates the function of a paging sequence computing module,
- figure 9 illustrates the function of a paging sequence selection module and of a paging sequence performing module.

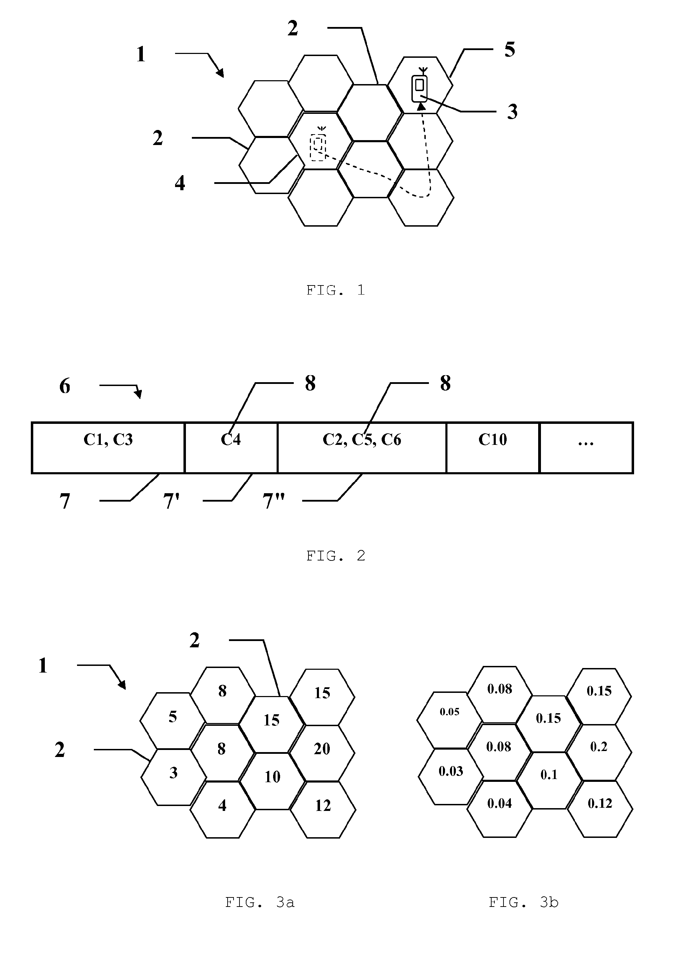

According to figure 1, is represented a paging group 1, comprising a plurality of cells 2, here ten cells. A mobile set 3 is in said paging group 1. The center cell 4, that is, the cell where the mobile set 3 has done its last location update is known, thanks to the location update done by said mobile set 3 when entering the paging group 1 or the timer location update done by said mobile set 3 when timing out. However, since the mobile set 3 has thus been located, it may have moved and the exact cell 5 where the mobile set is located is not known, since a mobile set 3 does not advertise the network when it moves, even when it cross a cell boundary. Here, the mobile set 3 has moved from center cell 4, along the doted path, has crossed four cell boundaries and is currently located in current cell 5. Only the current cell 5 where the mobile set 3 is currently located can contact said mobile set 3. The paging problem is to find the mobile set 3 and thus to find the current cell 5. To find such current cell 5, a paging strategy is defined in the form of a paging sequence 6.

Given a paging group 1 comprising a given number N of cells Ci, {i=1..N}, as illustrated at figure 2, a paging sequence 6 comprises at least one set 7. Said sets 7 are ordered. Each of said successive sets 7 comprises at least one cell 8. One cell 8 may pertain to at most one set 7. A paging sequence 6 may not necessary comprise all the cells 8 of said paging group 1.

A paging sequence 6 is used to page a given mobile set 3 when needed, for example, when a call intend to reach said mobile set 3. To page a mobile set 3 according to a given paging sequence 6, that is to page said paging sequence 6, one has to page each set 7, one after the other, in the order of said paging sequence 6. To page a set 7, means to page all cells 8 of said set 7, or to send a paging message to all cells 8 of said set 7. A cell 8 when receiving such a paging message pages all the mobile sets 3 in its covered area. If the searched mobile set 3 is reach, also called paged, it replies by sending back a acknowledgement message indicating it has been found. This ends the paging process. The paging process is applied to the first set 7, a time out may be waited, in order to let the paged mobile set 3 enough delay to reply, and if said mobile set 3 is not found (has not replied) at time out, the paging process goes on with the next set 7', and the next set 7", and so on, until the end of the paging sequence 6.

In order to save resources, and mainly radio resources, the main goal of the invention is to define an optimized paging sequence 6, that is, a paging sequence 6 with a reasonable probability, or under a given probability, of finding said mobile set 3, in a minimum delay, or under a given delay, or with a minimum number of cells and/or sets paged.

To do so the method comprises a step of organizing, at least a subsets of cells 8 of said paging group 1 into at least one paging sequence 6. Said organizing step may either determine a given paging sequence 6 just before the paging step that pages said paging sequence 6, or all the possible paging sequences 6 may advantageously be prepared in advance and indexed so as to be easily retrieved when needed at paging step time.

Said organizing step may be realized by a paging controller located at the paging group, or by a centralized controller or by any controller of the network.

According to the invention, the organizing of a paging sequence 6 comprises the following steps. First, a ranking value is computed for each cell 8 pertaining to said paging sequence 6. Second, said cells 8 are ordered, after said ranking value, in descending order. Last, said ordered cells 8 are grouped by gathering contiguous cells 8 into sets 7.

In order to optimize a paging sequence 6 to better save resources, it is interesting to place near the beginning of the paging sequence 6, where they will be paged first, the cells 8 where the mobile set 3 has the highest probability to be.

Said ranking value is advantageously equal, for each cell 8, to a mobile set presence probability value indicative of the probability of presence of said mobile set 3 in said cell 8.

Since, depending on the load situation, different cells might consume different radio resources to page a mobile set, a paging cost value representing a radio resource consumption to page a mobile in said cell may be introduced. Said radio resource may be either statistically measured or estimated base on the characteristics of the cell. For each cell, the network can store such a paging cost value. The ranking value can advantageously be said mobile set presence probability value divided by said paging cost. Said ratio is also called an efficiency value.

When, to simplify, paging cost values are considered equal for all cells 8, using efficiency value is equivalent to use mobile set presence probability value for ranking.

The cell 4 by which said paged mobile set 3 has last done a location update into said paging group 1, or the center cell 4 of said mobile set 3, appears to be an important data when trying to determine where the mobile set 3 currently is. Accordingly, the method when determining the mobile set presence probability values would determine them in function of said center cell 4. Of course the mobile set presence probability value for a given cell 2 is function of said cell 2.

It is also interesting to index, for instance in an two dimensions array, said mobile set presence probability values using cell 2 and center cell 4 as indexes, to ease a future retrieving.

There are, at least, two main approaches to determine said mobile set probability values. According to the method a first way is purely statistical, and a second is based on a simulation model.

The first statistical approach may determine said mobile set probability value out off statistics about location and mobility of mobile sets 3 in the network.

The mobile set probability values may be taken proportional to the relative number of mobile sets present in cells 8. As figured in figure 3a and 3b, the paging group 1 with the presences (in number of mobile sets) indicated on figure 3a, would lead to the probability values indicated on figure 3b, by a normalisation operation, in order the total probability remains equal to 1. Said relative numbers may be considered at a given time, on a given time range (for instance the last day, week or month...) or the mean of said relative number. The paradigm is here: there is more chance to find a mobile set 3 where there are more mobile sets.

More realistically, the mobile set probability values may be taken proportional to the relative number of mobile sets 3 present in cells 8 that enters the paging group 1 by the same center cell 4 as said paged mobile set 3. Only mobiles sets 3 that entered the paging group 1 by the same center cell 4 are considered. The paradigm is here: the ways through a paging group 1 tend to be the same for all mobile sets 3 entering by the same center cell 4.

It can be interesting also to take into account the time of entering. The paradigm is here: the ways through a paging group tend to be the same at a given time (time of the day for example).

It can be interesting also to take into account the delay since the entering. The paradigm is here: the location of a paged mobile set 3 in a paging group after a given delay tends to be the same as the location of other mobile sets 3 after the same delay since entering. This is especially more when the mobile sets 3 entered by the same center cell 4.

Many such paradigms can be employed or combined to statistically determine a probability of presence of a mobile set 3 in each cell 8.

A important source of data to fuel said statistical approach are statistics about location and mobility of mobile sets 3 in the network. Said statistics may advantageously comprise mean and variance of mobile set presence time in each cell 8 and/or in paging group 1.

An important source of such statistics may come from counters from operation and maintenance centre. Said OMC counters generally exist in a cellular network.

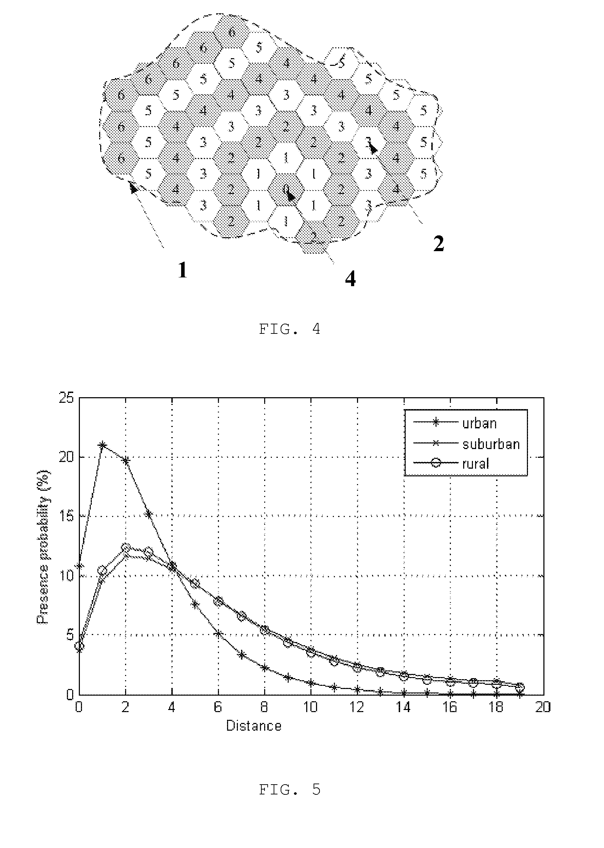

The second modelling approach uses a model. It can be a given distribution (gaussian, poison,...) centred on the center cell 4. Here the paradigm is: the paged mobile set 3 has more chance to be in the cell 4 where it entered. Here the topology and geographical relations of the cells of said paging group 1 may be used. The distance from the center cell 4, as illustrated at figure 4, is used to decrease the probability of presence. Figure 4, shows a paging group 1. The distance to a center cell 4 is indicated in each cell 2. I.e. the cell referred 2 is located at a distance 3 of said center cell 4. The higher the distance to the center cell 4 is, the lower the probability is. To calculate the distance, either a common size of cell can be used or a mean size for each cell.

With reference to figure 5, some illustrative distributions are shown, indicating presence probability vs. distance to the center cell 4. Here different models are considered depending of the kind of paging group 1, between urban, suburban or rural.

A variant can be to take into account the delay since it entered the paging group 1. Then the distribution evolves taking into account a probable displacement of the mobile set 3. Then the distribution no more presents a single maximum centred on the center cell 4, but a "ring" of maxima on cells located on a ring at a distance of said center cell corresponding to the distance probably crossed by the mobile set 3 during said delay.

Such a model may then advantageously takes into account a speed of said mobile set 3, for determining said distance in function of said delay since entering. Such a speed can be considered by its mean.

Many other parameters can be taken into account to improve said model, such as for example a mean rate of arriving calls to said mobile set 3.

Said mobile set probability values for all the cells 8, whatever the determining approach, are determined for each cell 8 and advantageously in function of the center cell. It can be stored e.g. as a table. A single set of values may be thus defined for the whole paging group 1.

A set of values can also be defined for each class of mobile sets presenting the same moving behaviour. A moving behaviour may be depending on the speed of said mobile set 3, on the moving range of said mobile set 3 in term of distance travelled or area covered, and so on.

A set of values can also be defined on a one mobile set 3 basis. In this case the paradigm becomes that a given mobile set 3 has better chances to reproduce the same movements, the same locations or the same travels.

Whatever the means used to determine said mobile set probability values, the paging sequence can be sorted along said ranking values determined from said probability values.

The paging sequence 6 then becomes an ordered sequence of cells 8. Such a paging sequence 6 can be paged. It may be regarded as a paging sequence 6 composed of sets 7 comprising one cell 8 each. However the efficiency of the paging step can be improved by a grouping operation that decreases the number of sets 7 and consequently the number of paging steps.

The grouping may be done for instance by grouping contiguous cells 8 with the same or near ranking values into the same set 7.

The grouping may also alternately be done by gathering cells 8 into shared sets 7 comprising significantly the same number of cells 8.

When a maximum paging delay is defined as a constraint, a number of sets 7 can be derived, said sets 7 being then filled by one of the two previous grouping methods.

More generally, the grouping step can also be done by optimisation under constraints using a cost function. The one skilled in the art knows methods to solve such an optimisation problem. The principle is to compute or choose at least a paging sequence 6 by a given grouping, to compute at least one cost value of said paging sequence 6 by mean of the cost function. By comparing each of said cost with at least one constraint value, one can find paging sequences satisfying said constraints. A trivial way is to determine all paging sequences and then applying the cost function.

There is several methods, known to the one skilled in the art, to optimize the determination of a paging sequence, in order either to more quickly find at least one paging sequence satisfying said constraints or to find a paging sequence providing optimal costs.

According to a first embodiment, the cost function calculates a sequence paging delay, that is, for a given paging sequence 6, the time needed to page it.

First, the method gets a cell paging delay for each cell 8, that is, a delay needed to page said cell 8. Said cell delay may either be retrieved from a storing location or be considered constant for all the cells 8.

The time to page a set 7 is the time to page all of its cells 8 plus a timeout delay if used. The time to page all the cells 8 of a set is the maximum of all the cell paging delays of said cells 8, since said cells are paged in parallel. By adding the times to page all sets 7 of said paging sequence 6, the cost, that is, the sequence paging delay can be computed.

Second, based on said cost function, an optimization can be applied to provide an optimal paging sequence 6 with the smallest sequence paging delay.

According to a second embodiment, the cost function still calculates the sequence paging delay for a given paging sequence 6. Here however, a constraint parameter: a maximum paging delay is defined. It defines a maximum acceptable delay for paging said mobile set 3. Such a parameter is very interesting in that a longer delay would very often ease the optimizing process. In function of the aim of the paging the allowed delay is not the same. For a voice call, a very short delay is needed. Instead, for SMS or e-mail, the paging can takes much more time. Then, the optimizing step provides a paging sequence 6 with a sequence paging delay less than said maximum paging delay. Such a process may be less consuming, quicker, especially when said maximum paging delay is high.

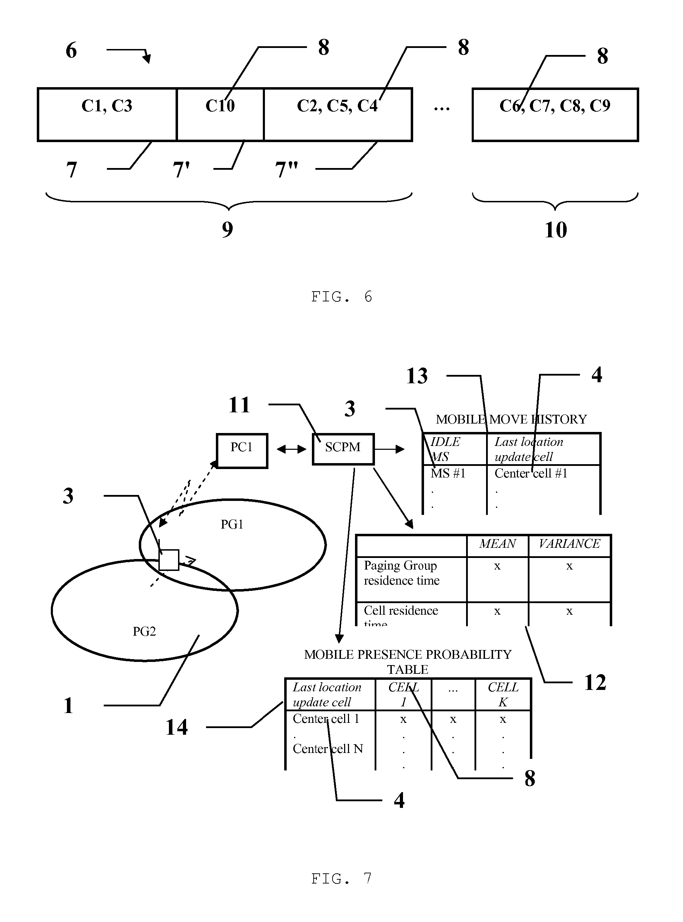

According to a third embodiment, two constraint parameters are defined. As previously, the maximum paging delay defines a maximum acceptable delay for paging said mobile set 3. In addition a maximum paging failure rate is defined. It defines a maximum rate of acceptable paging failure. Since there are two constraints, two operations can be optimized during the optimizing step. As illustrated at figure 6, the determined paging sequence 6 is cut into two parts, an initial part 9, of most ranked cells 8, defines a truncated paging sequence 9, and a tail part 10 of remaining cells 8. The cells 8 pertaining to the tail 10 are not intended to be paged. The cells 8 pertaining to the truncated paging sequence 9 are then grouped into sets 7. The truncated paging sequence 9 is the paging sequence 6 used for paging step.

Since there are two constraints, two costs must be calculated by the cost function to be compared respectively to said constraints. The paging process will fail in finding the mobile set 3 if the mobile set 3 is located in one of the cells 8 pertaining to the tail 10. Accordingly, a first cost is the failure rate that can be determined by computing the probability of presence of paged mobile set 3 in any of the cells 8 pertaining to said tail 10. Knowing the mobile set presence probability values of each cell 8, the cells 8 pertaining to said tail 10 can be determined in order to optimize said tail 10. An optimal tail 10 advantageously comprises as much cells 8 as possible, in order to save resources since said cells 8 are not paged, with a failure rate or total tail mobile set presence probability value less than said maximum paging failure rate.

The second cost is, as previously, the sequence paging delay but calculated for the paging sequence effectively paged, that is, for the truncated sequence 9. Under the constraint of said sequence paging delay being less than said maximum paging delay, the grouping of said truncated paging sequence 9 can be optimized. Iteration between the truncating step and the grouping step can be done to optimize the truncated paging sequence 9 (its truncation and its grouping) so as to satisfy both constraints.

The several embodiments of the method can be implemented in a network controller, for instance a controller in charge of a paging group: a paging controller. Said paging controller may be in a preferred embodiment a part of a WiMAX Access Controller, WAC. It may also be distributed over several such WACS.

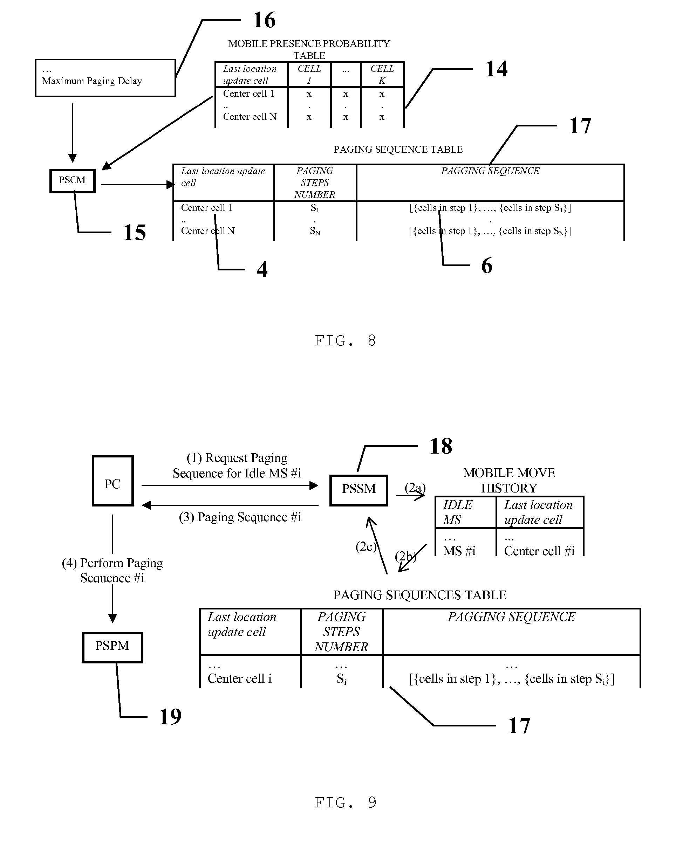

A paging controller, PC, according to a preferred embodiment, may be supplied with the following modules:
- a statistics collector and processor module 11, SCPM, that, as illustrated at figure 7, gathers statistics about mobile sets locations and mobility in the network (e.g. from a table 12 giving mean and variance of mobile residence time in each cell and in paging group). It also knows for each mobile set 3, MS, the center cell 4, from a mobile move history table 13. Out of these data, SCPM computes the probability of presence of a mobile set in a given cell 8, based on the center cell 4 where the mobile set 3 did its last paging update. Said probability of presence may be stored in a table 14, indexed on center cell 4,
- a paging sequence computing module 15, PSCM, that, as illustrated at figure 8, based on the collected and computed statistics 14, from SCPM 11, computes a paging sequence 6 for each center cell 4, taking for instance a maximum paging delay 16 parameter as input. Said paging sequences 6, may be stored in a paging sequence table 17, indexed on center cell 4,

- a paging sequence selector module 18, PSSM, as illustrated at figure 9, that, when a mobile set 1 needs to be paged, selects a paging sequence 6 computed by the PSCM 15 corresponding to the center cell 4 of the mobile set 3,
- a paging sequence performing module 19, PSPM, as illustrated at figure 9, that effectively realize the paging by sending paging messages following the paging sequence 6 selected by the PSSM 18.

When a paging request for the mobile set MS#I arrives, the paging controller contacts the PSSM 18 that finds out the center cell 4 where the mobile set MS#1 entered or lastly location updated into the paging group 1 and identifies a paging sequence 6 from the paging sequence table 17. Said paging sequence 6 is used by the PSPM 19 to perform the paging step.

In one preferred embodiment the paging controller, PC, is part of a WiMAX Access Controller, WAC, or is distributed over several WACs.

The paging method and paging controller according to the invention advantageously allows a great save in the resources used for paging a given mobile set 3. Depending on the embodiment and the given values of the constraints a important gain can be obtained. Even with small delay tolerances, 60% of paging cost can be saved (for urban environment) as compared to a prior art single-step paging. For higher delay tolerances, the paging method may save up to 90% of paging cost. This case is fully applicable to slow service like Emails, SMS.

A paging group 1 is intended to save resources. The larger a paging group 1 is (that is, it comprises more cells 2), the more resources are saved, for instance by reducing the occurrences of location updates. However the larger a paging group 1 is, the longer it takes to page a mobile set 3 inside. The invention, by optimizing and then reducing the resources needed to page, thus advantageously allows enlarging paging groups.

## Claims

1. A method, in a cellular network comprising at least one paging group (1), said paging group (1) comprising at least one cell (2), for paging a mobile set (3) in said paging group (1) comprising the steps of:
- organizing cells (2, 8) of said paging group (1) into at least one paging sequence (6) comprising ordered sets (7, 7', 7") comprising said cells (2, 8), one cell pertaining to at most one set (7),
- paging said paging sequence (6) by successively paging each set (7, 7', 7") of cells (8) by sending a paging message to all the cells (8) pertaining to said set (7, 7', 7"), one set (7, 7', 7") at a time, in order of appearance in said paging sequence (6), until said mobile set (3) is found,
**characterized in that** said organizing cells step comprises:
- computing a ranking value for each cell (8) pertaining to said paging sequence (6),
- ordering said cells (8) after said ranking value in descending order,
- grouping contiguous ordered cells (8) into sets (7, 7' 7").

2. The method of claim 1, wherein said ranking value is an efficiency value equal to a mobile set presence probability value representing a probability of presence of said mobile set (3) in said cell (8) divided by a paging cost value representing a radio resource consumption to page said mobile in said cell (8).

3. The method of claim 1 or 2, wherein said ranking value is equal to a mobile set presence probability value.

4. The method of any one of claims 1 to 3, wherein said mobile set presence probability value is function of said cell (2, 8) and of a center cell (4) where said mobile set (3) has done its last location update into said paging group (1).

5. The method of claim 4, wherein said mobile set probability value is determined statistically out off statistics about location and mobility of mobile sets (3) in the network.

6. The method of claim 5, wherein said statistics comprise mean and variance of mobile set presence time in each cell (8) and/or in paging group (1).

7. The method of claim 5 or 6, wherein said statistics are derived from counters from operation and maintenance centre.

8. The method of claim 4, wherein said mobile set probability value is determined by a simulation model taking into account parameters among:
- topology and geographical relations of the cells (2, 8) of said paging group (1),
- mean size of a cell (2, 8),
- mean speed of said mobile set (3),
- mean rate of arriving calls to said mobile set (3).

9. The method of any one of claims 4 to 8, wherein said mobile set probability value is defined for said paging group (1), for a class of mobile sets presenting the same moving behaviour, or for each mobile set (3).

10. The method of any one of claims 1 to 9, where the grouping step comprises:
- getting for each cell (2, 8) a cell paging delay,
- optimizing the grouping of ordered cells (8) to form a paging sequence (6), under a cost function, computing for said paging sequence (6), a sequence paging delay out of said cell paging delays, in order to provide a paging sequence (6) with the smallest sequence paging delay.

11. The method of claim 10, further comprising:
- configuring a maximum paging delay defining a maximum acceptable delay for paging said mobile set (3),
and wherein the optimizing step provides a paging sequence (6) with a sequence paging delay less than said maximum paging delay.

12. The method of any one of claims 1 to 9, where the grouping step comprises:
- configuring a maximum paging delay defining a maximum acceptable delay for paging said mobile set (3),
- configuring a maximum paging failure rate defining a maximum rate of acceptable paging failure,
- getting for each cell (8) a cell paging delay,
- optimizing grouping and truncating of ordered cells (8) to form a paging sequence (6), under a cost function, computing for said truncated paging sequence (9) a sequence paging delay out of said cell paging delays, and a sequence failure rate, until providing a paging sequence (6, 9) with a sequence paging delay less than said maximum paging delay and a sequence failure rate less than said maximum failure rate.

13. A paging controller, in a cellular network comprising at least one paging group (1), said paging group (1) comprising at least one cell (2), able to page a mobile set (3), in said paging group (1), comprising :
- a paging sequence computing module (15), adapted to organize cells (2, 8) of said paging group (1) into at least one paging sequence (6) comprising ordered sets (7, 7', 7") comprising said cells (8), one cell pertaining to at most one set,
- a paging sequence performing module (19), adapted to page said paging sequence (6) by successively paging each set (7, 7', 7") of cells (8) by sending a paging message to all the cells (8) pertaining to said set (7, 7', 7"), one set at a time, in order of appearance in said paging sequence (6), until said mobile set (3) is found,
**characterized in that** said paging sequence computing module (15) further comprises:
- means for computing a ranking value for each cell (8) pertaining to said paging sequence (6),
- means for ordering said cells (8) after said ranking value in descending order,
- means for grouping contiguous ordered cells (8) into sets (7, 7', 7").

14. The paging controller of claim 13, wherein said ranking value is an efficiency value equal to a mobile set presence probability value representing a probability of presence of said mobile set (3) in said cell (8) divided by a paging cost value representing a radio resource consumption to page said mobile in said cell (8).

15. The paging controller of claim 13 or 14, wherein said ranking value is equal to a mobile set presence probability value.

16. The paging controller of any one of claims 13 to 15, wherein said mobile set presence probability value is function of said cell (2, 8) and of a center cell (4) where said mobile set (3) has done its last location update into said paging group (1).

17. The paging controller of claim 16, wherein said mobile set probability value is determined statistically out off statistics about location and mobility of mobile sets (3) in the network.

18. The paging controller of claim 17, wherein said statistics comprise mean and variance of mobile set presence time in each cell (8) and/or in paging group (1).

19. The paging controller of claim 17 or 18, wherein said statistics are derived from counters from operation and maintenance centre.

20. The paging controller of claim 16, wherein said mobile set probability value is determined by a simulation model taking into account parameters among:
- topology and geographical relations of the cells (2, 8) of said paging group (1),
- mean size of a cell (2),
- mean speed of said mobile set (3),
- mean rate of arriving calls to said mobile set (3).

21. The paging controller of any one of claims 16 to 20, wherein said mobile set probability value is defined for said paging group (1), or for a class of mobile sets (3) presenting the same moving behaviour, or for each mobile set (3).

22. The paging controller of any one of claims 13 to 21, where the means for grouping further comprises:
- means for getting for each cell (8) a cell paging delay,
- means for optimizing the grouping of ordered cells (8) to form a paging sequence (6), under a cost function, computing for said paging sequence (6), a sequence paging delay out of said cell paging delays, in order to provide a paging sequence (6) with the smallest sequence paging delay.

23. The paging controller of claim 22, further comprising:
- means for configuring a maximum paging delay defining a maximum acceptable delay for paging said mobile set (3),
and wherein means for optimizing are able to provides a paging sequence (6) with a sequence paging delay less than said maximum paging delay.

24. The paging controller of any one of claims 13 to 21, where the means for grouping further comprises:
- means for configuring a maximum paging delay defining a maximum acceptable delay for paging said mobile set (3),
- means for configuring a maximum paging failure rate defining a maximum rate of acceptable paging failure,
- means for getting for each cell (8) a cell paging delay,
- means for optimizing grouping and truncating of ordered cells (8) to form a paging sequence (6), under a cost function, computing for said truncated paging sequence (9) a sequence paging delay out of said cell paging delays, and a sequence failure rate, until providing a paging sequence (6, 9) with a sequence paging delay less than said maximum paging delay and a sequence failure rate less than said maximum failure rate.
